# FASCICULE DE BREVET EUROPEEN

(11) **EP 0 942 840 B1**
(45) Date de publication et mention de la délivrance du brevet: **11.06.2003**
(21) Numéro de dépôt: 98943952.6
(22) Date de dépôt: 10.09.1998
(51) Int. Cl.: B60J 1/14, E05F 15/12

(54) **VITRAGE ORIENTABLE POUR VEHICULES AUTOMOBILES**
SCHWENKBARES FAHRZEUGFENSTER
ADJUSTABLE GLAZING FOR MOTOR VEHICLES

(30) Priorité: 04.10.1997 DE 29717718 U
(43) Date de publication de la demande: 22.09.1999
(73) Titulaire: SAINT-GOBAIN GLASS FRANCE, 92400 Courbevoie (FR)
(72) Inventeur: CORNILS, Gerd, D-52399 Merzenich (DE); PANITZ, Jürgen, D-52388 Nörvenich (DE)
(74) Mandataire: Cardin, Elise
(86) Numéro de dépôt international: FR9801931
(87) Numéro de publication internationale: WO99017945

(56) Documents cités:
- EP-A- 0 646 483
- DE-A- 3 925 804
- DE-U- 8 709 446
- GB-A- 1 215 267
- US-A- 5 560 153

## Description

La présente invention a trait à un vitrage orientable pour véhicules automobiles, comprenant un cadre de vitrage présentant une bride de fixation, une vitre en verre trempé, un cordon de colle élastiquement déformable, disposé le long d'une partie du pourtour de la vitre et collant la vitre à la bride de fixation, un joint d'étanchéité profilé en élastomère disposé contre la vitre au moins dans la partie du pourtour de la vitre non couverte par le cordon de colle, et un mécanisme d'ouverture et de fermeture agissant sur un endroit de la vitre situé à l'opposé du cordon de colle.

Un vitrage orientable pivotant de ce type est déjà connu de par le document DE-U-8709446. Dans ce vitrage orientable connu, le cordon de colle fait fonction de charnière et est installé le long du bord vertical avant de la vitre. Le long des autres bords de la vitre, un joint d'étanchéité profilé préformé est fixé sur le bord de la vitre.

Le document US-A-5 560 153 révèle un vitrage orientable pour véhicules automobiles dans lequel un cordon de colle disposé le long du bord horizontal supérieur de la vitre fait fonction de charnière, le mécanisme d'ouverture et de fermeture agissant sur le milieu du bord inférieur de la vitre. Dans ce cas-ci aussi, le cordon de colle ne s'étend que sur une ligne droite au milieu du bord supérieur de la vitre et se termine avant la zone d'angle arrondie qui, à l'instar de la partie restante du pourtour de la vitre, est rendue étanche par un joint tubulaire simple qui est disposé, pour sa part, sur la bride du cadre de vitrage.

Les vitrages orientables connus de ce type présentent des inconvénients spécifiques. En l'occurrence, toutes les formes de réalisation connues ont en commun que, lorsque le vitrage est en position ouverte dans un véhicule automobile en mouvement par temps de pluie, il n'empêche pas la pénétration de la pluie. En outre, les vitrages orientables connus présentent l'inconvénient que les vitres, quand elles sont ouvertes, tremblent, en particulier lorsque le véhicule roule à grande vitesse, et provoquent ainsi des bruits gênants.

L'invention a pour but de perfectionner un vitrage orientable du type décrit dans le préambule de telle sorte que, en position ouverte dans un véhicule en mouvement, il soit, d'une part, suffisamment étanche à l'égard de la pénétration de la pluie et que, d'autre part, il ne présente pas de mouvements de tremblement gênants, en particulier à grande vitesse.

Le vitrage orientable suivant l'invention se caractérise en ce que le cordon de colle est disposé le long du bord vertical avant, le long du bord supérieur et, en suivant le contour de l'angle supérieur arrière de la vitre, le long d'un segment supérieur du bord arrière de la vitre, et en ce que le mécanisme d'ouverture et de fermeture du vitrage orientable agit dans la zone de l'angle inférieur arrière de la vitre.

Contrairement aux vitrages orientables connus, dans le cas du vitrage orientable suivant l'invention, le cordon de colle est également disposé dans une partie du pourtour de la vitre dans laquelle le cordon de colle ne joue en aucun cas le rôle de charnière lors de l'ouverture et de la fermeture du vitrage. Lors de l'ouverture du vitrage, le cordon est au contraire exclusivement, ou au moins en majeure partie, sollicité en extension en cet endroit. L'angle de pivotement de la vitre non seulement provoquera dans ce cas l'extension élastique de cette partie du cordon de colle, mais en outre une partie du moment de flexion exercé sur la vitre par le mécanisme d'ouverture mènera également, dans une certaine mesure, à une flexion élastique de la vitre, ce qui augmentera encore la rigidité mécanique de la vitre dans sa position ouverte. Etant donné que la vitre est en verre trempé, le mécanisme d'ouverture peut, si le collage est relativement solide, exercer un moment de flexion relativement élevé sur la vitre, ce qui donne une construction particulièrement stable.

Le vitrage orientable suivant l'invention possède en outre l'effet favorable que, même en position ouverte, il est remarquablement étanche à l'égard de la pluie et des poussières volantes, puisque le bord avant dans le sens de la marche, le bord supérieur et la partie supérieure du bord arrière, dans le sens de la marche, de la vitre sont reliés d'un bout à l'autre de manière étanche à la carrosserie du véhicule.

La longueur sur laquelle le cordon de colle s'étend le long du bord vertical arrière de la vitre, est avantageusement déterminée au cas par cas en fonction de la géométrie de la vitre et de la configuration du cordon de colle. En général, la longueur de ce segment peut être de l'ordre de 10 à 40 %, notamment de 15 à 30 %, en particulier 15 à 25 %, de la longueur totale de ce bord vertical arrière. Lorsque l'on utilise un système de collage courant, par exemple un système de collage à base d'un système de polyuréthanne à un composant durcissant sous l'effet de l'humidité, la longueur de ce segment du cordon de colle peut être d'environ un quart à un tiers de la longueur totale de ce bord vertical arrière de la vitre.

Selon un autre aspect de réalisation avantageux de l'invention, le joint d'étanchéité profilé en élastomère disposé sur le bord de la vitre comprend deux levres d'étanchéité sensiblement parallèles l'une à l'autre, à savoir une grande lèvre s'étendant par-dessus l'espace séparant le pourtour de la vitre et le cadre de vitrage, et une petite lèvre prenant appui sur le cadre de vitre au niveau du décochement entre le cadre de vitrage et la bride de fixation. Tandis que la grande lèvre d'étanchéité extérieure constitue une protection suffisante contre les projections d'eau normales par temps de pluie, la petite lèvre d'étanchéité intérieure s'appuie contre le cadre de vitrage avec une contrainte de flexion plus élevée en raison de ses dimensions inférieures et accroît l'effet d'étanchéité dans une mesure telle qu'une bonne étanchéité est aussi assurée sous une sollicitation importante, comme cela est par exemple inévitable lors d'un nettoyage au jet d'eau à haute pression.

Des aspects de réalisation avantageux de l'invention découlent des revendications dépendantes et de la description ci-dessous d'un exemple de réalisation préféré de l'invention donnée avec référence au dessin annexé.

Dans le dessin,

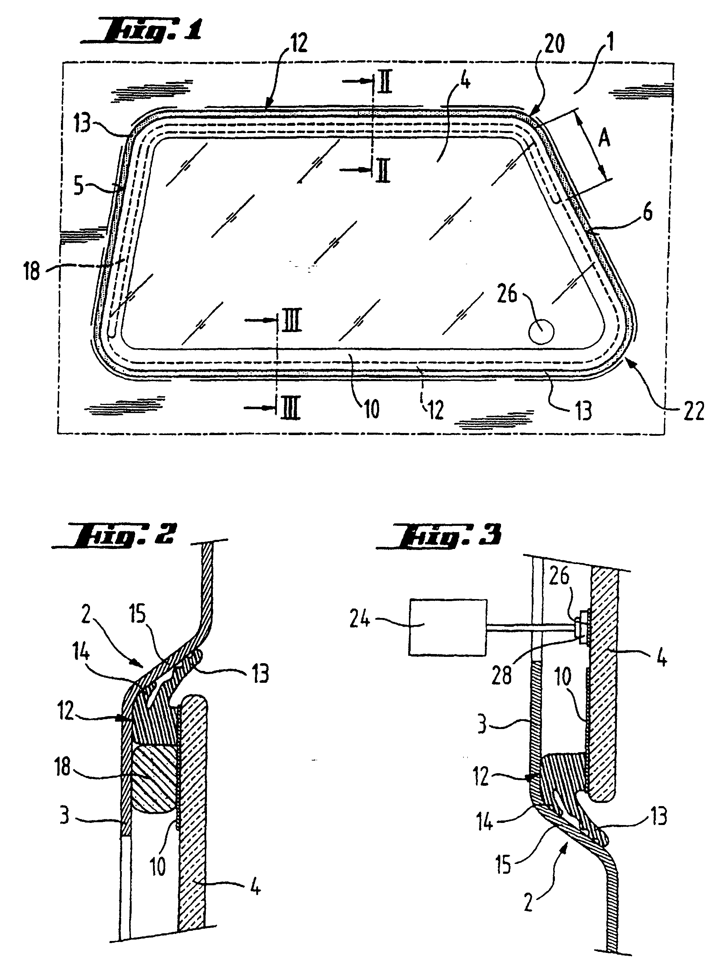

- **la Fig. 1** est une vue extérieure d'un vitrage orientable monté dans le cadre de vitrage d'un véhicule automobile par jonction collée;
- **la Fig. 2** est une coupe suivant la ligne II - II de la Fig. 1, et
- **la Fig. 3** est une coupe suivant la ligne III - III de la Fig. 1.

Le vitrage représenté est un vitrage orientable arrière d'une voiture. Dans la tôle de la carrosserie 1 se trouve le cadre de vitrage (ou baie) 2 qui est pourvu d'une bride de fixation 3 pour la vitre 4. Le bord 5 de la vitre 4 est le bord avant, orienté vers l'avant de la voiture, tandis que le bord 6 est le bord arrière de la vitre, orienté vers l'arrière de la voiture. La vitre 4 est en verre trempé thermiquement et est munie, sur tout le bord de son périmètre, d'un cadre décoratif 10 en émail opaque qui a été appliqué par sérigraphie et recuit au cours du chauffage nécessaire à la trempe de la vitre.

La vitre 4 comporte un cadre d'étanchéité 12 périphérique en élastomère disposé le long de tout le pourtour de la vitre 4 qui, de préférence, a été moulé directement sur la vitre 4. Le moulage de ce cadre d'étanchéité 12 sur la vitre 4 peut être réalisé suivant le procédé de moulage par injection ou suivant le procédé d'extrusion, la surface du verre ou la surface du cadre décoratif 10 étant éventuellement traitée au préalable par application d'un promoteur d'adhérence approprié de telle sorte qu'une adhérence durable, de bonne qualité, du cadre d'étanchéité 12 à la vitre ou au cadre décoratif 10 soit garantie. Parmi les élastomères convenant pour le cadre d'étanchéité 12 figurent notamment le PVC, les systèmes de polyuréthanne ou les élastomères thermoplastiques à base de polyoléfine tels que polypropylène isotactique et/ou caoutchouc éthylène-propylène-diène. Le formage de cadres d'étanchéité de ce genre avec ces matériaux fait partie de l'état de la technique.

Le cadre d'étanchéité 12 est pourvu de deux lèvres d'étanchéité en saillie radialement, a savoir une grande lèvre d'étanchéité 13, qui est la plus proche de la surface de verre, et une petite lèvre d'étanchéité 14, qui s'étend parallèlement à la première.

Dans une forme de réalisation particulière, la grande lèvre 13 est au moins environ deux fois plus longue que la petite lèvre 14.

Lorsque la vitre est à l'état monté, la grande lèvre d'étanchéité 13 s'appuie contre le cadre de vitrage 2, tout le long de celui-ci, et elle s'étend par-dessus l'espace existant entre le bord périphérique de la vitre 4 et la paroi 15 opposée à celui-ci. La petite lèvre 14, qui, en raison de sa longueur moindre, est moins flexible, porte contre la base du cadre de vitrage avec une force de pression accrue d'autant et assure une bonne étanchéité même sous une pression d'eau élevée.

A côté du cadre d'étanchéité 12, directement sur une partie du pourtour de la vitre, est disposé le cordon de colle 18 au moyen duquel la vitre 4 est collée à la bride de fixation 3 dans ces zones de pourtour.

De façon alternative, le cordon de colle pourrait être déposé sur une surface appropriée du cadre d'étanchéité.

L'épaisseur de ce cordon de colle 18 sera choisie en fonction des propriétés élastiques caoutchoutiques du matériau formant la colle de telle sorte que les sollicitations nécessaires en torsion et en extension du cordon de colle engendrent uniquement une déformation élastique. En ce qui concerne le matériau formant la colle, les matériaux à base de systèmes de polyuréthanne durcissant à l'humidité qui sont couramment utilisés pour monter des vitres dans la carrosserie d'un véhicule automobile, ont fait leurs preuves. L'épaisseur du cordon de colle 18 ne devrait de préférence pas être inférieure à 5 mm et elle sera de préférence de 6 à 8 mm.

Le long du bord avant 5 de la vitre, le cordon de colle 18 s'étend pratiquement sur toute la hauteur de la vitre 4 et se termine à proximité du bord inférieur de la vitre. Au-dessus, le cordon de colle 18 se prolonge sans interruption le long de tout le bord supérieur de la vitre, jusqu'au-delà de l'angle supérieur arrière 20 de la vitre 4 et le long du segment supérieur A du bord arrière 6 de la vitre. Le segment A représente environ 15 à 30% de la longueur totale de ce bord de la vitre, soit environ 60 à 100 mm.

Sur la vitre 4 agit, au niveau de l'angle arrière inférieur 22, un mécanisme 24 d'ouverture et de fermeture de type connu et traditionnel qui est représenté sous une forme schématique sur la Fig. 3. A cet endroit, la vitre 4 peut être pourvue d'un trou destiné à l'accouplement de ce dispositif à la vitre. En variante, la vitre 4 peut toutefois être aussi pourvue à cet endroit d'un dépôt plan 26 en émail auquel l'élément d'accouplement 28 du mécanisme de fermeture est fixé par un assemblage collé.

## Revendications

1. Vitrage orientable pour véhicules automobiles comprenant un cadre de vitrage (2) présentant une bride de fixation (3), une vitre en verre trempé (4), un cordon de colle (18) élastiquement déformable disposé le long d'une partie du pourtour de la vitre (4)et collant la vitre à la bride de fixation (3), un joint d'étanchéité (12)profilé en élastomère disposé contre la vitre au moins dans la partie du pourtour de la vitre (4) non couverte par le cordon de colle (18), et un mécanisme (24) d'ouverture et de fermeture agissant sur un endroit de la vitre situé à l'opposé du cordon de colle, **caractérisé en ce que** le cordon de colle (18) est disposé le long du bord avant (5), le long du bord supérieur et, en suivant le contour de l'angle supérieur arrière (20) de la vitre (4), le long d'un segment supérieur (A) du bord arrière (6) de la vitre (4) et **en ce que** le mécanisme d'ouverture et de fermeture (24) du vitrage orientable agit dans la zone de l'angle inférieur arrière (22) de la vitre (4).

2. Vitrage orientable suivant la revendication 1, **caractérisé en ce que** la longueur du segment (A) du cordon de colle, dans la partie supérieure du bord arrière (6) de la vitre (4), représente 10 à 40%, et de préférence 15 à 25%, du bord arrière (6) de la vitre (4).

3. Vitrage orientable suivant la revendication 1 ou 2, **caractérisé en ce que** le joint d'étanchéité profilé (12) est disposé le long de tout le pourtour de la vitre (4).

4. Vitrage orientable suivant l'une des revendications précédentes, **caractérisé en ce que** le joint d'étanchéité profilé (12) est disposé directement sur le bord de la vitre (4) et **en ce que** le cordon de colle (18) est disposé, parallèlement à côté du joint d'étanchéité profilé (12).

5. Vitrage orientable suivant l'une des revendications précédentes, **caractérisé en ce que** le joint d'étanchéité profilé (12) se compose d'un élastomère thermoplastique de polyoléfine, de PVC ou d'un système de polyuréthanne.

6. Vitrage orientable suivant l'une quelconque des revendications 1 à 5, **caractérisé en ce que** le joint d'étanchéité profilé (12) présente deux lèvres d'étanchéité (13, 14) disposées parallèlement l'une à l'autre, dont la lèvre d'étanchéité (13) voisine de la surface de verre est plus longue, notamment au moins à peu près deux fois plus longue que la deuxième lèvre d'étanchéité (14).

## Claims

1. Adjustable window for motor vehicles, comprising a glazing frame (2) having a fixing flange (3), a toughened glass pane (4), an elastically deformable bead of glue (18) disposed along part of the periphery of the pane (4) and bonding the pane to the fixing flange (3), a profiled elastomer sealing joint (12) disposed against the pane at least in the part of the periphery of the pane (4) which is not covered by the bead of glue (14), and an opening and closing mechanism (24) acting on a point on the pane situated opposite to the bead of glue, **characterised in that** the bead of glue (18) is disposed along the front edge (4), along the top edge and, following the contour of the top rear corner (20) of the pane (4), along an upper segment (A) of the rear edge (6) of the pane (4), and **in that** the opening and closing mechanism (24) of the adjustable glazing acts in the area of the bottom rear corner (22) of the pane (4).

2. Adjustable window according to Claim 1, **characterised in that** the length of the segment (A) of the bead of glue, in the upper part of the rear edge (6) of the pane (4), represents 10% to 40% and preferably 15% to 25% of the rear edge (6) o.f the pane (4)

3. Adjustable window according to Claim 1 or 2, **characterised in that** the profiled sealing joint (12) is disposed along the entire periphery of the pane (4).

4. Adjustable window according to one of the preceding claims, **characterised in that** the profiled sealing joint (12) is disposed directly on the edge of the window (4) and **in that** the bead of glue (18) is disposed parallel alongside the profiled sealing joint (12).

5. Adjustable window according to one of the preceding claims, **characterised in that** the profiled sealing joint (12) is composed of a thermoplastic elastomer of polyolefin, PVC or a polyurethane system.

6. Adjustable window according to any one of Claims 1 to 5, **characterised in that** the profiled sealing joint (12) has two sealing lips (13, 14) disposed parallel to each other, where the sealing lip (13) adjacent to the glass surface is longer, in particular at least approximately twice as long as the second sealing lip (14).

## Patentansprüche

1. Ausstellfenster für Kraftfahrzeuge mit einem einen Befestigungsflansch (3) aufweisenden Fensterrahmen (2), einer Glasscheibe (4) aus vorgespanntem Glas, einer entlang eines Teils des Scheibenumfangs angeordneten, die Glasscheibe mit dem Befestigungsflansch (3) verklebenden elastisch verformbaren Kleberraupe (18), einem wenigstens in dem von der Kleberraupe (18) nicht erfassten Teil des Scheibenumfangs an der Glasscheibe (4) angeordneten Dichtprofil (12) aus einem Elastomer, und einem an einer der Kleberraupe gegenüberliegenden Stelle der Glasscheibe angreifenden öffnungs- und Schließmechanismus (24), **dadurch gekennzeichnet, dass** die Kleberraupe (18) entlang der vorderen Kante (5), entlang der oberen Kante und um die hintere obere Ecke (20) der Glasscheibe (4) herum entlang eines oberen Abschnitts (A) der hinteren Kante (6) der Glasscheibe(4) angeordnet ist, und dass der Öffnungs- und Schließmechanismus (24) des Ausstellfensters im Bereich der hinteren unteren Ecke (22) der Glasscheibe (4) angreift.

2. Ausstellfenster nach Anspruch 1, **dadurch gekennzeichnet, dass** die Länge des Abschnitts (A) der Kleberraupe im oberen Teil der hinteren Kante (6) der Glasscheibe (4) 10 bis 40 %, und vorzugsweise 15 bis 25 % der hinteren Kante (6) der Glasscheibe (4) beträgt.

3. Ausstellfenster nach Anspruch 1 oder 2, **dadurch gekennzeichnet, dass** das Dichtprofil (12) entlang dem gesamten Umfang der Glasscheibe (4) angeordnet ist.

4. Ausstellfenster nach einem der vorstehenden Ansprüche, **dadurch gekennzeichnet, dass** das Dichtprofil (12) unmittelbar am Rand der Glasscheibe (4), und die Kleberraupe (18) parallel hierzu neben dem Dichtprofil (12) angeordnet ist.

5. Ausstellfenster nach einem der vorstehenden Ansprüche, **dadurch gekennzeichnet, dass** das Dichtprofil (12) aus thermoplastischem Polyolefin-Elastomer, aus PVC oder aus einem Polyurethan-System besteht.

6. Ausstellfenster nach einem der Ansprüche 1 bis 5, **dadurch gekennzeichnet, dass** das Dichtprofil (12) zwei parallel zueinander angeordnete Dichtlippen (13, 14) aufweist, von denen die der Glasoberfläche benachbarte Dichtlippe (13) länger, insbesondere wenigstens zweimal länger ist als die zweite Dichtlippe (14).
